# EUROPEAN PATENT APPLICATION

(11) **EP 4 636 671 A1**
(43) Date of publication of application: **22.10.2025**
(21) Application number: 24171194.4
(22) Date of filing: 19.04.2024
(51) Int. Cl.: G06Q 20/06, G06Q 20/22, G06Q 20/36, G06Q 20/38

(54) **SECURE WALLET SERVICE PROVIDING UNIT, ELECTRONIC CURRENCY TRANSACTION SYSTEM, AND METHOD FOR PROVIDING A SECURE WALLET SERVICE PROVIDING UNIT**

(71) Applicant: Giesecke+Devrient advance52 GmbH, 81677 München (DE)
(72) Inventor: HUPEL, Lars, 81677 München (DE)
(74) Representative: Ter Meer Steinmeister & Partner

(57) **Abstract**

A secure wallet service providing unit (SWU) comprising: at least one electronic currency wallet (TU) of a user of an electronic currency transaction system (TS), wherein the at least one electronic currency wallet (TU) is hosted on the secure wallet ser-vice providing unit (SWU); at least one smart contract execution unit (SCU) for executing at least one smart contract (SC), wherein each smart contract (SC) comprises a smart contract code (SCC) and a smart con-tract electronic currency wallet (SCW) assigned to the smart contract (SC), the smart con-tract electronic currency wallet (SCW) configured for providing at least one electronic currency transaction in the electronic currency transaction system (TS).

## Description

The invention relates to a secure wallet service providing unit. The invention also relates to an electronic currency transaction system. The invention also relates to a method for providing a secure wallet service providing unit.

In electronic currency transaction systems, there are electronic transactions provided. Electronic transactions, such as electronic payment transactions, can be made on an account-based model or an electronic currency-based model. A transaction in the account-based model triggers nodes to decrement the balance of the payer's account and to increment the balance of the payee's account. Alternatively, in an electronic currency-based model, electronic currencies are directly (or indirectly) transferred between payer and payee, e.g. using electronic wallets etc., whereby electronic data representing the currency is deleted, deactivated, and/or invalidated at the payer-side. Both models are applicable within this disclosure.

Electronic currency - also referred to as means/instrument of payment, tokens, digital assets, electronic coins, coin data sets - may represent any digital asset, in particular a digital currency, preferably a central bank digital currency, short CBDC. These electronic currencies are minted and melted by a technical unit, such as an issuing unit or dismissing unit of the electronic currency transaction system, being a part or representing an issuing authority, or a central bank unit or a commercial bank unit. The electronic currency usually comprises at least a monetary value (v) and a reference (r) as data elements but is not limited thereto. Electronic currencies may be exchanged within an online electronic transaction system or an offline electronic transaction system and can further be dependent on the used transaction model as explained above. For instance, an electronic currency-based model uses offline token and an account-based model uses online electronic currencies.

There are different technical approaches for exchanging such electronic currencies within the electronic currency transaction system.

Electronic currency transactions and/or storage of electronic currencies and any associated transaction data and/or storage data in an electronic currency transaction system must be safe, secure, and so, means for protecting confidentiality, privacy, integrity, and availability of exchanged and/or stored electronic currency data must be implemented. This is especially true for electronic payment transactions and associated payment transactions and payment storages in which a monetary value is linked with each electronic currency.

Since the degree of automatization increases in the modern world in all technical fields, smart contracts become more and more relevant in the technical field of electronic currency transactions. There is a need for providing a secure wallet service providing unit and smart contracts to a user of an electronic currency transaction system. The secure wallet service providing unit should be highly flexible, reliable and user convenient.

The above-identified objectives are solved with the features of the independent patent claims. Further advantageous embodiments are described in the dependent patent claims.

In an aspect of the present invention there is provided a secure wallet service providing unit. The secure wallet service providing unit comprises at least one electronic currency wallet of a user of an electronic currency transaction system, wherein the at least one electronic currency wallet is hosted on respectively by the secure wallet service providing unit. The secure wallet service providing unit further comprises at least one smart contract execution unit for executing at least one smart contract, wherein each smart contract comprises a smart contract code and a smart contract electronic currency wallet assigned to the smart contract. The smart contract electronic currency wallet is configured for providing at least one electronic currency transaction in the electronic currency transaction system.

The secure wallet service providing unit may represent any unit being configured for providing a service, in particular a financial service, to a user of an electronic currency transaction system. For instance, the secure wallet service providing unit may be a unit of a financial service provider, FSP, being configured for providing a financial service to a user of the electronic currency transaction system. The secure wallet service providing unit may be configured for managing respectively hosting at least one, in particular a plurality of, electronic currency wallet and at least one, in particular a plurality of smart contract having at least one smart contract electronic currency wallet. The electronic currency wallets and the smart contract respectively smart contract electronic currency wallet may be separate from each other. The separation of the electronic currency wallets and the smart contract respectively smart contract electronic currency wallet may be provided by executing both on different servers or by executing both on different parts of a server but is not limited thereto. The secure wallet service providing unit is preferably a part of a blockchain-free transaction system.

The electronic currency wallet or electronic currency transaction unit may represent any unit being configured for storing electronic currency respectively token to be directly exchanged between users/participants of an electronic token transaction system. In other words, the electronic currency wallet may be configured for providing at least one electronic currency transaction in the electronic currency transaction system. The electronic currency wallet or electronic currency transaction unit may be also called a payment application unit or a secure element but is not limited thereto. The electronic currency wallet may be hosted on respectively by the secure wallet service providing unit. The electronic currency wallet may comprise a control unit. The control unit of the electronic currency wallet may be configured for controlling the electronic currency wallet, e.g. for initiating and/or managing transactions, loading and unloading of electronic currencies, registering of electronic currencies within the electronic transaction system but is not limited thereto.

The user may represent any user, i.e. natural or juridical person, of an electronic currency transaction system. The user may be a client or a costumer of a financial service provider like banks or IoT services that take part in respectively are members of the electronic currency transaction system. Each user may be different to another user but is not limited thereto. The user may be also any person, i.e. natural or juridical, being or to become a participant within or initiator of a smart contract. For instance, the user may become a participant of smart contract after initiation or registration.

The smart contract may represent any digital or electronical contract. For instance, the smart contract may be a computer program or a transaction protocol or any executable software routine that is intended to automatically execute, control or document events and actions according to the terms of a contract or an agreement. With the fulfilment of the smart contract, there may be one or more transactions of electronic currencies.

The smart contract may comprise a smart contract code and at least one smart contract electronic currency wallet. For instance, each one of the at least one smart contract is assigned, i.e. the smart contract electronic currency wallet and the smart contract are directly linked to each other and closely work with each other, to exactly one smart contract electronic currency wallet or a limited number of smart contract electronic currency wallet. Preferably the limited number of smart contract electronic currency wallet is assigned, matches or is identical to the number of initiators of the smart contract.

The smart contract code may be the code respectively programming code (executable software code) of the smart contract. The smart contract code may comprise information about the participants respectively initiators of the smart contract, the rules, the permissions, the monetary values to be transacted, and principle of the smart contract but is not limited thereto.

The smart contact code may be stored in a memory internal in the secure wallet service providing unit or external to the secure wallet service providing unit in a memory or a blockchain. The at least one smart contract electronic currency wallet may be a secure electronic currency transaction unit configured for solely providing at least one electronic currency transaction in the electronic currency transaction system. This at least one electronic currency transaction in the electronic currency transaction system is only provided between participants or initiators of the smart contract.

The at least one smart contract electronic currency wallet may comprise an electronic currency transaction control providing unit. The electronic currency transaction control providing unit may represent any unit being configured for providing electronic currency transaction control parameters. The electronic currency transaction control parameter may represent any parameter being configured for enabling or disabling at least one electronic currency transaction for the secure wallet service providing unit of the user, i.e. participant or initiator, and the secure wallet service providing unit of the at least one other user, i.e. participant or initiator.

The electronic currency transaction control parameter may be a key, a key sum ("r1+r2"), a sub-key ("r1| | r2"), at least two separate authentication keys or at least two separate unlocking keys (like used for a safe deposit box) but is not limited thereto. For instance, the key may be a private key from a token of the electronic currency transaction system or a private key of a user's account but is not limited thereto. The private key of a user's account may be assigned from a system that is unrelated to the electronic currency transaction system.

The electronic currency transaction control parameter may include a string or an integer but is not limited thereto. The electronic currency transaction control parameter may be pre-generated or generated on demand. Further, the electronic currency transaction control providing unit may represent any unit being configured for transmitting the electronic currency transaction control parameter to the secure wallet service providing unit of the at least one other user, i.e. participant or initiator.

The smart contract execution unit may represent any unit being configured for executing a smart contract. For instance, executing may comprise the running (performing) of the smart contract on the smart contract execution unit and/or that the smart contract is hosted on or by the smart contract execution unit. The smart contract execution unit may be included in the secure wallet service providing unit but is not limited thereto.

The smart contract execution unit may comprise communication means for communicating directly or indirectly with the smart contract, the control unit and/or the smart contract initiating unit but is not limited thereto. Furthermore, the smart contract execution unit may comprise a processor but is not limited thereto.

The smart contract execution unit may further comprise a smart contract initiating unit and a control unit but is not limited thereto. The control unit of the smart contract execution unit may represent any unit being configured for controlling the smart contract execution unit, i.e. the processes within the smart contract execution unit, processes may be transaction of electronic currencies or fulfilment of conditions as defined in the smart contract.

The smart contract execution unit may comprise a smart contract initiating unit, a smart contract electronic currency wallet providing unit, and a smart contract electronic currency wallet ID providing unit but is not limited thereto. The smart contract initiating unit may be configured for initiating respectively generating or providing a smart contract in the at least one smart contract execution unit.

The smart contract initiating unit may comprise a smart contract creation request receiving unit. The smart contract creation request receiving unit may represent any unit being configured for receiving at least one smart contract creation request from at least one user, i.e. participant or initiator of the smart contract, of the electronic currency transaction system.

The smart contract creation request may represent any request, query, or question of a user to the secure wallet service providing unit for generating, creating/ generating or providing a smart contract. For instance, the smart contract creation request may comprise all or a part of all necessary information for generating a smart contract. For instance, the smart contract creation request may comprise information respectively data of or about the participants/initiators, the permissions, and the programming code but is not limited thereto.

The programming code may be provided by the smart contract initiating unit or may be received from an unit being external to the smart contract initiating unit and/or the secure wallet service providing unit, e.g. an external memory or blockchain. Based on the information respectively data received with the smart contract creation request, the smart contract initiating unit may decides, i.e. approves or denies, about a creation/generation of at least one smart contract in the at least one smart contract execution unit.

The smart contract initiating unit further comprises a smart contract signature unit. The smart contract signature unit may represent any unit being configured for querying and receiving a signature from the user, i.e. participant or initiator, of the electronic currency transaction system, which has provided the at least one smart contract creation request. Additionally, the smart contract signature unit may represent any unit being configured for querying and receiving a signature from at least one other user, i.e. participant or initiator, of the electronic currency transaction system being mentioned in the at least one smart contract creation request. The queried and received signature may be a certificate being unique for every user, i.e. participant or initiator, but is not limited thereto.

The smart contract initiating unit further comprises a smart contract electronic currency wallet providing unit. The smart contract electronic currency wallet providing unit may represent any unit being configured for providing the smart contract electronic currency wallet in each smart contract. The providing of the smart contract electronic currency wallet may be executed during or after the decision about a creation/generation of at least one smart contract in the at least one smart contract execution unit provided by the smart contract initiating unit.

Furthermore, the smart contract initiating unit further comprises a smart contract electronic currency wallet ID providing unit. The smart contract electronic currency wallet ID providing unit may represent any unit being configured for providing an ID of the smart contract electronic currency wallet, in particular the provided smart contract electronic currency wallet. For instance, the providing of an ID of the smart contract electronic currency wallet may be executed during or after the smart contract electronic currency wallet providing unit was provided by the smart contract electronic currency wallet providing unit. The ID of the smart contract electronic currency wallet may include integer and/or strings but is not limited thereto. Additionally, the smart contract electronic currency wallet ID providing unit may represent any unit being configured for transmitting the provided ID to the user, i.e. participant or initiator, and the at least one other user, i.e. participant or initiator.

By including, beside/separate to an electronic currency wallet, a smart contract having a smart contract electronic currency wallet in the secure wallet service providing unit, a unit can be provided enabling the user of using both the electronic currency wallet of an electronic currency transaction system and a smart contract. Additionally, by using a smart contract, the degree of automatization can be increased in the technical field of electronic currency transactions and a reduction of the need for trusted intermediators, arbitration costs, and fraud losses, as well as the reduction of malicious and accidental exceptions can be provided.

In a preferred embodiment of the secure wallet service providing unit, each one of the at least one smart contract is assigned to exactly one smart contract electronic currency wallet or to a limited number of smart contract electronic currency wallets. Preferably, the limited number is assigned to the initiators of the smart contract.

In a preferred embodiment of the secure wallet service providing unit, the at least one smart contract execution unit comprises a smart contract initiating unit configured for initiating a smart contract in the at least one smart contract execution unit.

In a preferred embodiment of the secure wallet service providing unit, the smart contract initiating unit comprises a smart contract creation request receiving unit configured for receiving at least one smart contract creation request from at least one user of the electronic currency transaction system.

In a preferred embodiment of the secure wallet service providing unit, the smart contract initiating unit further comprises a smart contract signature unit being configured for querying and receiving a signature from the user of the electronic currency transaction system, which has provided the at least one smart contract creation request, and for querying and receiving a signature from at least one other user of the electronic currency transaction system, mentioned in the at least one smart contract creation request.

In a preferred embodiment of the secure wallet service providing unit, the smart contract initiating unit further comprises a smart contract electronic currency wallet providing unit being configured for providing the smart contract electronic currency wallet in each smart contract.

In a preferred embodiment of the secure wallet service providing unit, the smart contract initiating unit further comprises a smart contract electronic currency wallet ID providing unit being configured for providing an ID of the smart contract electronic currency wallet and for transmitting the provided ID to the user and the at least one other user.

In a preferred embodiment of the secure wallet service providing unit, the at least one smart contract electronic currency wallet comprises an electronic currency transaction control providing unit being configured for providing electronic currency transaction control parameter enabling or disabling at least one electronic currency transaction for the secure wallet service providing unit of the user and the secure wallet service providing unit of the at least one other user, and being configured for transmitting the electronic currency transaction control parameter to the secure wallet service providing unit of the at least one other user.

By providing electronic currency transaction control parameter, i.e. parameter for controlling wallet authentication and the transaction, to the user, i.e. participants or initiators of the smart contract, and the at least one other user, i.e. participants or initiators of the smart contract, the control of the electronic currency transaction of the secure wallet service providing unit is provided, influenced, controlled or affected commonly by all users, i.e. participators or initiators, of the smart contract. Alternatively, a majority decision is also possible, i.e. a threshold exceeding number of user approves or denies the execution of the smart contract and/or the electronic currency transaction. Additionally, the control of the electronic currency transaction of the secure wallet service providing unit is provided, influenced, controlled or affected commonly by the secure wallet service providing unit but is not limited thereto. In other words, each one of the users of the smart contract and/or the secure wallet service providing unit confirms the smart contract execution and/or the electronic currency transaction of the secure wallet service providing unit. Therefore, one user is not able to control the electronic currency transaction of the secure wallet service providing unit by its own such that the trust in the smart contract can be increased.

In a preferred embodiment of the secure wallet service providing unit, the transaction control parameter is a key, a key sum, a sub-key.

In a preferred embodiment of the secure wallet service providing unit, the at least one smart contract execution unit further comprises a control unit being configured for controlling the smart contract execution unit. Additionally, the at least one electronic currency wallet comprises a control unit configured for controlling the electronic currency wallet.

In another aspect of the invention there is provided an electronic currency transaction system comprising at least one secure wallet service providing unit as described above and at least one other secure wallet service providing unit.

In another aspect of the invention there is provided a method for providing a secure wallet service providing unit. The method comprises the following steps: providing at least one smart contract in a smart contract execution unit by providing a smart contract code and by providing a smart contract electronic currency wallet being assigned to the smart contract, wherein the smart contract electronic currency wallet is configured for providing at least one electronic currency transaction in the electronic currency transaction system.

In a preferred embodiment of the method for providing a secure wallet service providing unit, the method for providing a secure wallet service providing unit further comprises the step of providing at least one electronic currency wallet of a user of an electronic currency transaction system.

In a preferred embodiment of the method for providing a secure wallet service providing unit, the providing of the smart contract further comprises the steps of receiving by a smart contract creation request receiving unit of a smart contract initiating unit at least one smart contract request from a user of an electronic currency transaction system for providing a smart contract.

In a preferred embodiment of the method for providing a secure wallet service providing unit, the providing of the smart contract further comprises the steps of providing a signature query and transmitting the signature query to the user providing the at least one smart contract request, receiving at least one signature from the user, providing a signature query and transmitting the signature query to at least one other user of the electronic currency transaction system, and receiving at least one signature from the at least one other user.

In a preferred embodiment of the method for providing a secure wallet service providing unit, the providing of the smart contract further comprises the following steps of providing the smart contract electronic currency wallet by a smart contract electronic currency wallet providing unit, wherein the smart contract electronic currency wallet is provided, when the signature of the user and the signature of the at least one other user are received.

In a preferred embodiment of the method for providing a secure wallet service providing unit, the providing of the smart contract further comprises the following steps of providing the ID of the smart contract electronic currency wallet to the user and the at least one other user by a smart contract electronic currency wallet ID providing unit.

In a preferred embodiment of the method for providing a secure wallet service providing unit, the providing of the smart contract further comprises the following steps of providing an electronic currency transaction control parameter by an electronic currency transaction control providing unit for the secure wallet service providing unit of the user and the secure wallet service providing unit of the at least one other user, transmitting the provided transaction control parameter to at least one secure wallet service providing unit of the at least one other user, and enabling at least one electronic currency transaction, when the transaction control parameter of the secure wallet service providing unit of the user and the at least one secure wallet service providing unit of the at least one other user matches.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure wallet service providing unit.
Fig. 2 shows an exemplary embodiment of an electronic currency transaction system.
Fig. 3 shows an exemplary embodiment of a method for providing a secure wallet service providing unit.
Fig. 4 shows an exemplary embodiment of a providing of at least one smart contract in the secure wallet service providing unit in a detailed manner.
Fig.5 shows an exemplary embodiment of a providing of at least one electronic currency transaction in the secure wallet service providing unit in a detailed manner.
Fig.6 shows another exemplary embodiment of a providing of at least one electronic currency transaction in the secure wallet service providing unit in a detailed manner.

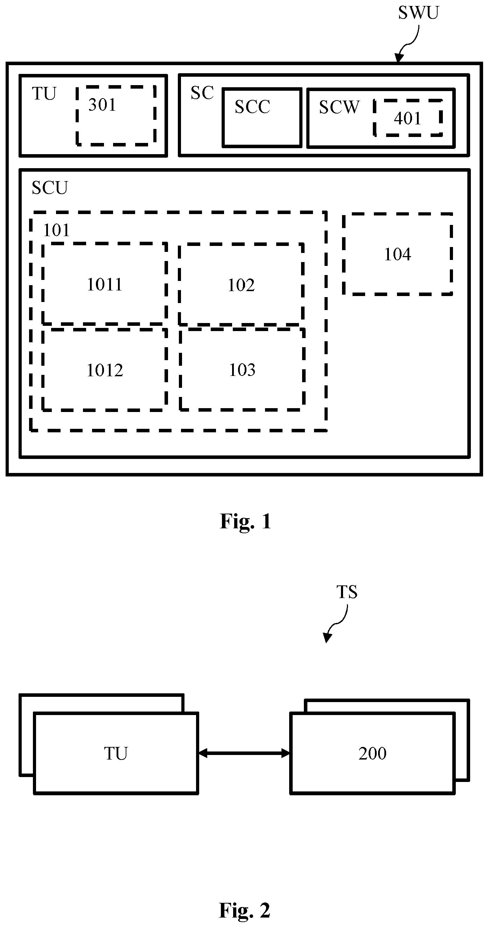

In Fig. 1, there is depicted an exemplary embodiment of a secure wallet service providing unit. The secure wallet service providing unit comprises at least one electronic currency wallet TU of a user of an electronic currency transaction system TS. The at least one electronic currency wallet TU is hosted on the secure wallet service providing unit SWU. Optionally, the at least one electronic currency wallet TU comprises a control unit 301. The control unit is configured for controlling the electronic currency wallet TU. The secure wallet service providing unit further comprises at least one smart contract execution unit SCU for executing at least one smart contract SC. The smart contract SC comprises a smart contract code SCC and a smart contract electronic currency wallet SCW, wherein the smart contract electronic currency wallet SCW is assigned to the smart contract SC. The smart contract electronic currency wallet SCW is configured for providing at least one electronic currency transaction in the electronic currency transaction system TS. The at least one electronic currency wallet, the at least one smart contract SC and/or the at least one smart contract execution unit SCU may be directly or indirectly by wire or wireless communicatively coupled to each other.

Optionally, the at least one smart contract electronic currency wallet SCW comprises an electronic currency transaction control providing unit 401. The electronic currency transaction control providing unit 401 is configured for providing electronic currency transaction control parameter enabling or disabling at least one electronic currency transaction for the secure wallet service providing unit SWU of the user and the secure wallet service providing unit SWU of the at least one other user. Additionally, the electronic currency transaction control providing unit 401 is configured for transmitting the electronic currency transaction control parameter to the secure wallet service providing unit SWU of the at least one other user.

Optionally, the at least one smart contract execution unit SCU comprises a smart contract initiating unit 101. The smart contract initiating unit 101 is configured for initiating a smart contract SC in the at least one smart contract execution unit SCU.

Optionally, the smart contract initiating unit 101 further comprises a smart contract creation request receiving unit 1011. The smart contract creation request receiving unit 1011 is configured for receiving at least one smart contract creation request from at least one user of the electronic currency transaction system TS.

Optionally, the smart contract initiating unit 101 further comprises a smart contract signature unit 1012. The smart contract signature unit 1012 is configured for querying and receiving a signature from the user of the electronic currency transaction system TS, which has provided the at least one smart contract creation request. Additionally, the smart contract signature unit 1012 is configured for querying and receiving a signature from at least one other user of the electronic currency transaction system TS, wherein the at least one other user is mentioned in the at least one smart contract creation request.

Optionally, the smart contract initiating unit 101 further comprises a smart contract electronic currency wallet providing unit 102. The smart contract electronic currency wallet providing unit 102 is configured for providing the smart contract electronic currency wallet SCW in each smart contract SC.

Optionally, the smart contract initiating unit 101 further comprises a smart contract electronic currency wallet ID providing unit 103. The smart contract electronic currency wallet ID providing unit 103 is configured for providing an ID of the smart contract electronic currency wallet SCW. Additionally, the smart contract electronic currency wallet ID providing unit 103 is configured for transmitting the provided ID to the user and the at least one other user.

Optionally, the at least one smart contract execution unit SCU further comprises a control unit 104. The control unit 104 is configured for controlling the smart contract execution unit SCU.

In Fig. 2, there is depicted an exemplary embodiment of an electronic currency transaction system. The electronic currency transaction system TS comprises at least one, in particular a plurality of, electronic currency wallets TU and at least one, in particular a plurality of, other secure wallet service providing unit 200. The electronic currency wallets TU and the other secure wallet service providing unit 200 may be directly or indirectly by wire or wireless communicatively coupled to each other.

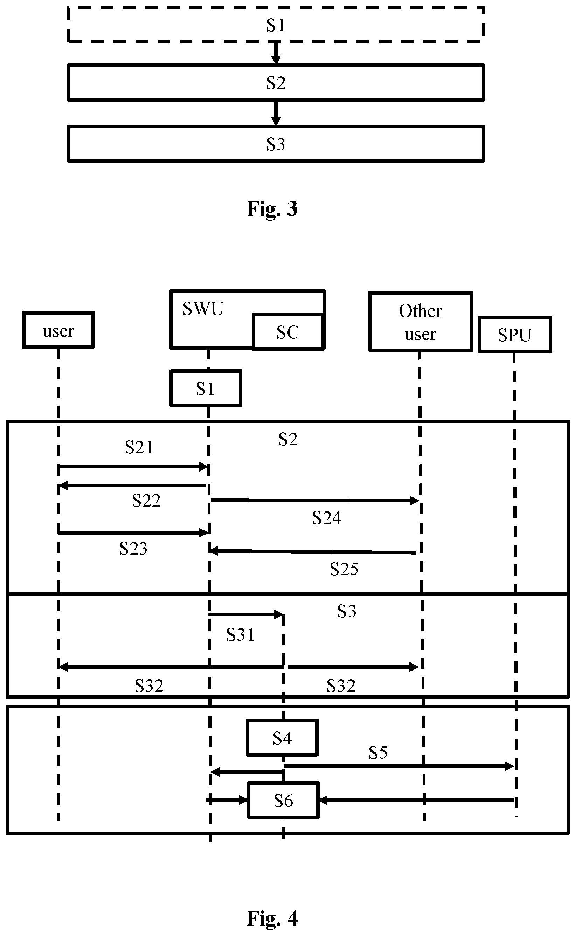

In Fig. 3, there is depicted an exemplary embodiment of a method for providing a secure wallet service providing unit. The method for providing a secure wallet service providing unit SWU, comprises the step of providing at least one smart contract SC in a smart contract execution unit SCU. The providing step of at least one smart contract SC comprises the following steps: In a first step S2, a smart contract code SCC is provided. In a second step S3, a smart contract electronic currency wallet SCW is provided. The smart contract electronic currency wallet SCW is assigned to the smart contract SC, wherein the smart contract electronic currency wallet SCW is configured for providing at least one electronic currency transaction in the electronic currency transaction system TS.

Optionally, the method for providing a secure wallet service providing unit SWU further comprises the step S1 of providing at least one electronic currency wallet TU of a user of an electronic currency transaction system TS. This providing step S1 is executed before the first and second step but is not limited thereto.

In Fig. 4, there is depicted an exemplary embodiment of a providing of at least one smart contract in the secure wallet service providing unit SWU in a detailed manner.

In a first step S1, at least one electronic currency wallet TU of a user of an electronic currency transaction system TS is provided.

In a second step S2 for providing at least one smart contract SC in a smart contract execution unit SCU, a smart contract code SCC is provided. The second step S2 comprises the following sub-steps; in a first sub-step S21, at least one smart contract request is received by a smart contract creation request receiving unit 1011 of a smart contract initiating unit 101 from a user of an electronic currency transaction system TS for providing a smart contract SC. In a second sub-step S22, a signature query is provided and the signature query is transmitted to the user which provides the at least one smart contract request. In a third sub-step S23, at least one signature is received from the user. In a fourth sub-step S24, a signature query is provided and the signature query is transmitted to at least one other user of the electronic currency transaction system TS. In a fifth sub- step S25, at least one signature is received from the at least one other user.

In a third step S3, the smart contract electronic currency wallet SCW is provided by the following sub-steps: In a first sub-step S31, the smart contract electronic currency wallet SCW is provided by a smart contract electronic currency wallet providing unit 102. The smart contract electronic currency wallet SCW is provided when the signature of the user and the signature of the at least one other user are received. In a second sub-step S32, the ID of the smart contract electronic currency wallet SCW is provided to the user and the at least one other user by a smart contract electronic currency wallet ID providing unit 103.

In a fourth step S4 for providing a smart contract, an electronic currency transaction control parameter is provided by an electronic currency transaction control providing unit 401 for the secure wallet service providing unit SWU of the user and the secure wallet service providing unit SWU of the at least one other user.

In a fifth step S5, the provided transaction control parameter are transmitted to at least one secure wallet service providing unit SWU of the at least one other user.

In a sixth step S6, at least one electronic currency transaction is enabled when the transaction control parameter of the secure wallet service providing unit SWU of the user and the at least one secure wallet service providing unit SWU of the at least one other user matches.

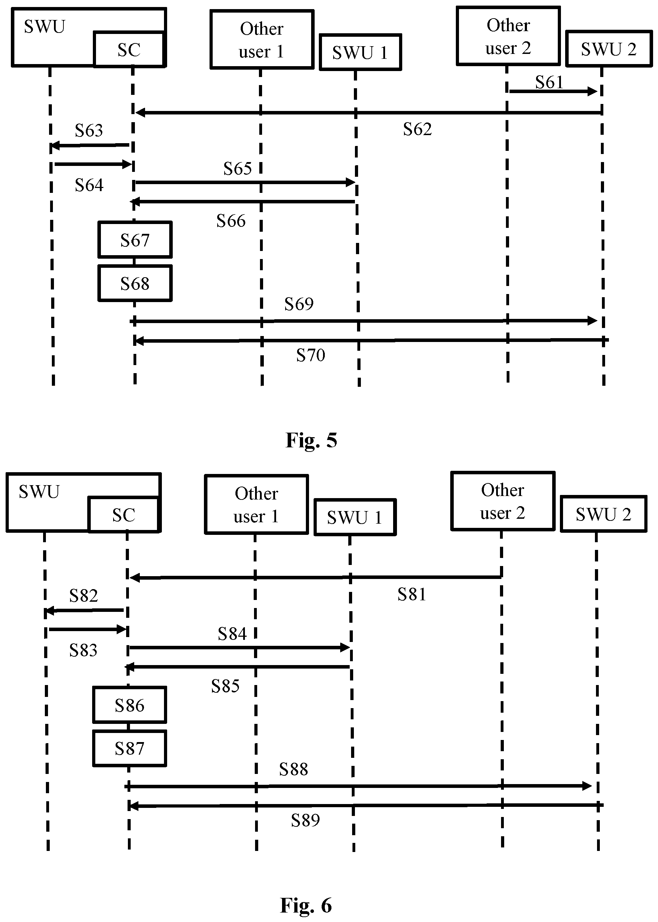

Fig.5 shows an exemplary embodiment of a providing of at least one electronic currency transaction by using the secure wallet service providing unit in a detailed manner of the sixth step S6.

In a first step S61, the other user2 provides a payment order to a third secure wallet SWU2. The payment order may comprise an integer and/or a string but is not limited thereto. The payment order may include information respectively data about what electronic currency value is send from one user, i.e. payer, to at least one other user, i.e. payee, but is not limited thereto. For instance, the payment order may include the payment execution date or a preferred payment execution date but is not limited thereto.

In a second step S62, the SWU2 provides a payment request to the smart contract SC. The payment request may include an integer and/or a string but is not limited thereto. The payment request may include information respectively data about what electronic currency value is send from one user, i.e. payer, to at least one other user, i.e. payee, but is not limited thereto.

In a third step S63, the smart contract SC is executed for the payment request, in particular incoming payment. When the smart contract is executed the result of the smart contract SC is provided to the first secure wallet service providing unit SWU. The first secure wallet service providing unit SWU signs the result of the smart contract SC by the unique certificate of the first secure wallet service providing unit SWU. In a fourth step S64, the first secure wallet service providing unit SWU provides the signed result of the smart contract back to the smart contract SC. Additionally, in the fourth step S64, the electronic currency transaction control parameter of the first secure wallet service providing unit SWU is provided to the smart contract.

In a fifth step S65, the result of the smart contract SC is also provided to the second secure wallet service providing unit SWU1 of another user1. The second secure wallet service providing unit SWU1 also signs the result of the smart contract SC by the unique certificate of the second secure wallet service providing unit SWU1. In a sixth step S66, the second secure wallet service providing unit SWU1 provides the signed result of the smart contract back to the smart contract SC. Additionally, in the sixth step S66, the electronic currency transaction control parameter of the second secure wallet service providing unit SWU1 is provided to the smart contract.

In a sept step S67, the signatures of the first secure wallet service providing unit SWU and the second secure wallet service providing unit SWU1 are checked, if the signatures are justified.

In an eight step S68, it is proved if the electronic currency transaction control parameter of the second secure wallet service providing unit SWU1 matches to the electronic currency transaction control parameter of the first secure wallet service providing unit SWU. In case both electronic currency transaction control parameter matches, the electronic currency transaction is approved. In case both electronic currency transaction control parameter do not match, the electronic currency transaction is denied.

In a ninth step S69, when both electronic currency transaction control parameter matches, the smart contract SC provides a new token or CBDC or digital asset to the third secure wallet SWU2. In a tenth step S70, the third secure wallet SWU2 provides a payment confirmation message to the smart contract for notifying the smart contract, that the payment has been executed.

Fig.6 shows another exemplary embodiment of a providing of at least one electronic currency transaction by using the secure wallet service providing unit in a detailed manner of the sixth step S6. In this exemplary embodiment, the smart contract is triggered without an incoming payment.

In a first step S81, the other user2 provides a trigger to the smart contract SC. The trigger may include an integer and/or a string but is not limited thereto. The trigger may include information respectively data about what electronic currency value is send from one user, i.e. payer, to at least one other user, i.e. payee, but is not limited thereto. For instance, the trigger may be a payment providing trigger but is not limited thereto.

Exemplary, the trigger may be a "locking request" locking a token or a part of a token for a certain time, e.g. "lock token until 2024-12-24". Exemplary, the trigger may be an "unlocking request" unlocking a token or a part of a token for a certain time, e.g. "unlock token until 2024-12-24".

Alternatively, the trigger may be a "current price request" for requesting and storing the current/actual price, e.g. price of a share, in the smart contract SC. For instance, the "current price request" trigger may be "current price of STOCK_A is $5.32" but is not limited thereto.

Alternatively, the trigger may be a "withdraw request" for containing a part of a present token in the smart contract wallet. For instance, the "withdraw" trigger may be "withdraw $123.45" but is not limited thereto.

All these trigger may include a signature to increase security.

In a second step S82, the smart contract SC is executed for the trigger. When the smart contract is executed the result of the smart contract SC is provided to the first secure wallet service providing unit SWU. The first secure wallet service providing unit SWU signs the result of the smart contract SC by the unique certificate of the first secure wallet service providing unit SWU. In a third step S83, the first secure wallet service providing unit SWU provides the signed result of the smart contract back to the smart contract SC. Additionally, in the third step S83, the electronic currency transaction control parameter of the first secure wallet service providing unit SWU is provided to the smart contract.

In a fourth step S84, the result of the smart contract SC is also provided to the second secure wallet service providing unit SWU1 of another user1. The second secure wallet service providing unit SWU1 also signs the result of the smart contract SC by the unique certificate of the second secure wallet service providing unit SWU1. In a fifth step S85, the second secure wallet service providing unit SWU1 provides the signed result of the smart contract back to the smart contract SC. Additionally, in the fifth step S85, the electronic currency transaction control parameter of the second secure wallet service providing unit SWU1 is provided to the smart contract.

In a sixth step S86, the signatures of the first secure wallet service providing unit SWU and the second secure wallet service providing unit SWU1 are checked, if the signatures are justified.

In an sept step S87, it is proved if the electronic currency transaction control parameter of the second secure wallet service providing unit SWU1 matches to the electronic currency transaction control parameter of the first secure wallet service providing unit SWU. In case both electronic currency transaction control parameter matches, the electronic currency transaction is approved. In case both electronic currency transaction control parameter do not match, the electronic currency transaction is denied.

In an eight step S88, when both electronic currency transaction control parameter matches, the smart contract SC provides a new token or CBDC or digital asset to the third secure wallet SWU2.

In a nineth step S89, the third secure wallet SWU2 provides a payment confirmation message to the smart contract for notifying the smart contract, that the payment has been executed. In case, when the trigger is a payment providing trigger, in an eight step S88, when both electronic currency transaction control parameter matches, the smart contract SC provides a triggering order (e.g. a token or CBDC or digital asset) to the third secure wallet SWU2.

In the nineth step S89, the third secure wallet SWU2 provides a payment receipt confirmation message to the smart contract for notifying the smart contract, that the payment has been received.

### REFERENCE SIGNS

- SWU: secure wallet service providing unit
- TU: electronic currency wallet
- TS: electronic currency transaction system
- SCU: smart contract execution unit
- SC: smart contract
- SCC: smart contract code
- SCW: smart contract electronic currency wallet
- 101: smart contract initiating unit
- 1011: smart contract creation request receiving unit
- 1012: smart contract signature unit
- 102: smart contract electronic currency wallet providing unit
- 103: smart contract electronic currency wallet ID providing unit
- 104: control unit
- 301: control unit
- 401: electronic currency transaction control providing unit
- S1: electronic currency wallet providing step
- S2: SC providing step, smart contract code providing step
- S21: smart contract request receiving step
- S22: signature query providing step transmitted to SC request providing user
- S23: SC user signature receiving step
- S24: signature query providing step transmitted to TS user
- S25: TS user signature receiving step
- S3: SCW providing step
- S31: SCW providing step by unit 102
- S32: ID providing step
- S4: SC providing step
- S5: Parameter transmitting step
- S6: Transaction enabling step
- S61: Payment order providing step
- S62: Payment request providing step
- S63: SC executing step
- S64: SWU providing step
- S65: SC result providing step
- S66: SWU signed result and/or parameter providing step
- S67: Signatures checking step
- S68: Parameter proving step
- S69: Token or digital asset providing step
- S70: Payment confirmation providing step
- S81: trigger providing step
- S82: SC executing step
- S83: SWU providing step
- S84: SC result providing step
- S85: SWU signed result and/or parameter providing step
- S86: Signatures checking step
- S87: Parameter proving step
- S88: Token or digital asset providing step
- S89: Payment confirmation providing step

## Claims

1. A secure wallet service providing unit (SWU) comprising:
at least one electronic currency wallet (TU) of a user of an electronic currency transaction system (TS),
wherein the at least one electronic currency wallet (TU) is hosted on the secure wallet service providing unit (SWU);
at least one smart contract execution unit (SCU) for executing at least one smart contract (SC),
wherein each smart contract (SC) comprises a smart contract code (SCC) and a smart contract electronic currency wallet (SCW) assigned to the smart contract (SC), the smart contract electronic currency wallet (SCW) configured for providing at least one electronic currency transaction in the electronic currency transaction system (TS).

2. The secure wallet service providing unit (SWU) according to claim 1, wherein each one of the at least one smart contract (SC) is assigned to exactly one smart contract electronic currency wallet (SCW) or to a limited number of smart contract electronic currency wallets (SCW), preferably the limited number being assigned to the initiators of the smart contract (SC).

3. The secure wallet service providing unit (SWU) according to any one of the previous claims, wherein the at least one smart contract execution unit (SCU) comprises a smart contract initiating unit (101) configured for initiating a smart contract (SC) in the at least one smart contract execution unit (SCU).

4. The secure wallet service providing unit (SWU) according to claim 3, wherein the smart contract initiating unit (101) comprises:
a smart contract creation request receiving unit (1011) configured for receiving at least one smart contract creation request from at least one user of the electronic currency transaction system (TS).

5. The secure wallet service providing unit (SWU) according to claim 4, wherein the smart contract initiating unit (101) further comprises:
a smart contract signature unit (1012) configured for querying and receiving a signature from the user of the electronic currency transaction system (TS), which has provided the at least one smart contract creation request, and for querying and receiving a signature from at least one other user of the electronic currency transaction system (TS), mentioned in the at least one smart contract creation request.

6. The secure wallet service providing unit (SWU) according to any one of the preceding claims, wherein the smart contract initiating unit (101) further comprises a smart contract electronic currency wallet providing unit (102) configured for providing the smart contract electronic currency wallet (SCW) in each smart contract (SC).

7. The secure wallet service providing unit (SWU) according to any one of the preceding claims, wherein the smart contract initiating unit (101) further comprises a smart contract electronic currency wallet ID providing unit (103) configured for providing an ID of the smart contract electronic currency wallet (SCW) and for transmitting the provided ID to the user and the at least one other user.

8. The secure wallet service providing unit (SWU) according to any one of the preceding claims, wherein the at least one smart contract electronic currency wallet (SCW) comprises an electronic currency transaction control providing unit (401) configured for providing electronic currency transaction control parameter enabling or disabling at least one electronic currency transaction for the secure wallet service providing unit (SWU) of the user and the secure wallet service providing unit (SWU) of the at least one other user, and configured for transmitting the electronic currency transaction control parameter to the secure wallet service providing unit (SWU) of the at least one other user, preferably, wherein the electronic currency transaction control parameter is a key, a key sum, a sub-key.

9. The secure wallet service providing unit (SWU) according to any one of the preceding claims, wherein the at least one smart contract execution unit (SCU) further comprises a control unit (104) configured for controlling the smart contract execution unit (SCU); and wherein the at least one electronic currency wallet (TU) comprises a control unit (301) configured for controlling the electronic currency wallet (TU).

10. An electronic currency transaction system (TS) comprising:
at least one secure wallet service providing unit (SWU) according to claims 1 to 9; and
at least one other secure wallet service providing unit (200).

11. Method for providing a secure wallet service providing unit (SWU), comprising:
providing at least one smart contract (SC) in a smart contract execution unit (SCU) by
providing (S2) a smart contract code (SCC) and
providing (S3) a smart contract electronic currency wallet (SCW) assigned to the smart contract (SC), wherein the smart contract electronic currency wallet (SCW) is configured for providing at least one electronic currency transaction in the electronic currency transaction system (TS).

12. Method according to claim 11, wherein the method for providing a secure wallet service providing unit (SWU) further comprises the step of:
providing (S1) at least one electronic currency wallet (TU) of a user of an electronic currency transaction system (TS).

13. Method according to claims 11 or 12, wherein the providing (S2) of the smart contract (SC) further comprises:
receiving (S21) by a smart contract creation request receiving unit (1011) of a smart contract initiating unit (101) at least one smart contract request from a user of an electronic currency transaction system (TS) for providing a smart contract (SC).

14. Method according to claim 13, wherein the providing (S2) of the smart contract further comprises:
providing (S22) a signature query and transmitting the signature query to the user providing the at least one smart contract request;
receiving (S23) at least one signature from the user;
providing (S24) a signature query and transmitting the signature query to at least one other user of the electronic currency transaction system (TS); and
receiving (S25) at least one signature from the at least one other user.

15. Method according to claims 11 to 14, wherein the providing (S3) of the smart contract electronic currency wallet (SCW) further comprises:
providing (S31) the smart contract electronic currency wallet (SCW) by a smart contract electronic currency wallet providing unit (102),
wherein the smart contract electronic currency wallet (SCW) is provided when the signature of the user and the signature of the at least one other user are received, preferably, wherein the providing (S3) of the smart contract electronic currency wallet (SCW) further comprises:
providing (S32) the ID of the smart contract electronic currency wallet (SCW) to the user and the at least one other user by a smart contract electronic currency wallet ID providing unit (103).

16. Method according to claims 11 to 15, wherein the providing (S2) of the smart contract further comprises:
providing (S4) an electronic currency transaction control parameter by an electronic currency transaction control providing unit (401) for the secure wallet service providing unit (SWU) of the user and the secure wallet service providing unit (SWU) of the at least one other user;
transmitting (S5) the provided transaction control parameter to at least one secure wallet service providing unit (SWU) of the at least one other user;
enabling (S6) at least one electronic currency transaction when the transaction control parameter of the secure wallet service providing unit (SWU) of the user and the at least one secure wallet service providing unit (SWU) of the at least one other user matches.
